# EUROPEAN PATENT APPLICATION

(11) **EP 4 589 378 A1**
(43) Date of publication of application: **23.07.2025**
(21) Application number: 25151109.3
(22) Date of filing: 10.01.2025
(51) Int. Cl.: G02F 1/35, G02F 1/355, G02F 1/377

(54) **OPTICAL WAVEGUIDE FOR FREQUENCY CONVERSION**

(30) Priority: 16.01.2024 US 202418414131
(71) Applicant: Nokia Solutions and Networks Oy, 02610 Espoo (FI)
(72) Inventor: ZHAO, Jie, Berkeley Heights, New Jersey (US); SAYEM, Ayed Al, Chatham, New Jersey (US)
(74) Representative: Nokia EPO representatives

(57) **Abstract**

A photonic chip for optical frequency conversion includes a substrate, and a planar optical waveguide disposed along a surface of the substrate. The optical waveguide has an optical core of periodically-poled thin-film ferroelectric material, the thickness of the optical core varying along the optical waveguide. The width of the optical core varies therealong in a manner correlated with variations of the thickness of the optical core along the optical waveguide, e.g. in a manner complementary to measured variations of the thickness.

## Description

### TECHNICAL FIELD

The present invention relates to integrated optical devices for optical frequency conversion.

### BACKGROUND

Periodically poled lithium niobate (PPLN) based nonlinear optical devices are important components for both quantum and classical optical communications. Such devices have demonstrated applications in various areas, including but not limited to optical parametric amplification, phase-sensitive amplification, entangled photon-pair generation, and squeezed light state generation. In the past decade, thin-film periodically poled lithium niobate (TF-PPLN) waveguides have attracted extensive attention. Compared to their conventional bulk counterparts, they offer stronger confinement to the optical modes, and thus have the potential of providing much higher nonlinear conversion efficiency. Moreover, the strong mode confinement also allows pronounced downsizing in the physical footprint of these thin-film devices, enabling large-scale integration of different optical components, e.g., with thin-film lithium niobate (TFLN) electro-optic modulators. Such thin-film devices can be heterogeneously integrated with the existing silicon photonic devices, including lasers and photodetectors, to create highly compact and highspeed optical transceivers. A key performance metric for such devices is their nonlinear conversion efficiency, and any improvement in this aspect would significantly enhance the effectiveness of all of the mentioned applications.

### SUMMARY

Embodiments described herein relate to optical devices utilizing thin-film optical waveguides formed in optically-nonlinear materials for optical frequency conversion.

According to an example embodiment, provided is an apparatus. The apparatus includes a photonic chip for optical frequency conversion. The photonic chip comprises a substrate having a surface, and a planar optical waveguide disposed along the surface. The planar optical waveguide comprises an optical core of periodically-poled thin-film ferroelectric material, the optical core having a thickness and a width, the thickness varying along the optical waveguide. The width of the optical core varies therealong in a manner correlated with variations of the thickness of the optical core at corresponding locations along the optical waveguide.

In some implementations, the width of the optical core varies along the optical waveguide such as to lessen a degradation of an optical frequency conversion efficiency of the optical waveguide due to the varying thickness of the optical waveguide.

In some implementations, the width of the optical core varies along the optical waveguide such as to maintain quasi phase matching (QPM) along the optical waveguide for pump light propagating in the optical core and light generated by non-linear conversion of the pump light in the optical core.

In some implementations, the width of the optical core varies along the optical waveguide in a complementary fashion to the thickness of the optical waveguide.

In some implementations, the width of the optical core varies along the optical waveguide such as to lessen variations of a phase difference between the pump light and light generated by non-linear conversion of the pump light along the optical waveguide caused by the variations of the thickness of the optical core.

An aspect of the present disclosure provides a method for fabricating an optical waveguide, comprising selectively etching a layer of a periodically-poled ferroelectric material disposed along a planar surface of a substrate to form an optical core of a waveguide, the optical core having a width that varies along a length of the waveguide in a manner correlated with variations of a thickness of the layer along the optical core of the waveguide.

### BRIEF DESCRIPTION OF THE DRAWINGS

Embodiments disclosed herein will be described in greater detail with reference to the accompanying drawings which represent preferred embodiments thereof, in which like elements are indicated with like reference numerals, and wherein:
FIG. 1A is a schematic cross-section of a photonic chip with an optical waveguide formed in a layer of optically nonlinear material;
FIG. 1B is a schematic plan view a portion of the photonic chip of FIG. 1A with the optical waveguide;
FIG. 2 is a schematic diagram illustrating an optical waveguide core formed in a periodically-poled ferroelectric optical material;
FIG. 3A is a plot of a TFLN layer thickness measured for an example TFLN layer over a distance of 15 mm along the layer;
FIG. 3B is a graph showing a modulation profile of an optical core width of a frequency-doubling waveguide formed in the TFLN layer of FIG. 3A that is predicted to restore the frequency doubling efficiency of the waveguide by compensating for the measured layer thickness variations of FIG. 3A;
FIG. 4A is a flowchart of a method for fabricating a frequency-converting optical waveguide in a layer of optically-nonlinear material according to a first example;
FIG. 4B is a schematic perspective view of a portion of a TFLN wafer prior to waveguide fabrication;
FIG. 5 is a plan view of an example optical waveguide with varying optical core width;
FIG. 6 is a flowchart of a method for fabricating a frequency-converting optical waveguide in a layer of optically-nonlinear material according to a second example.

### DETAILED DESCRIPTION OF SOME SPECIFIC EMBODIMENTS

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments that depart from these specific details. In other instances, detailed descriptions of well-known methods, devices, and circuits may be omitted so as not to obscure the description of the present invention. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Furthermore, the following abbreviations and acronyms may be used in the present document:
"CMOS" Complementary Metal-Oxide-Semiconductor
"Si" Silicon
"LN" Lithium Niobate
"LNOI" Lithium Niobate on Insulator
"TFLN" Thin-Film Lithium Niobate
"PIC" Photonic Integrated Circuit
"RI" Refractive Index
"SOI" Silicon on Insulator
"SiP" Silicon Photonics

Note that as used herein, the terms "first", "second", and so forth are not intended to imply sequential ordering, but rather are intended to distinguish one element from another, unless explicitly stated. Similarly, sequential ordering of method steps does not imply a requirement of sequential order of their execution, unless explicitly stated. The term "vertical" refers to a direction generally perpendicular to a surface of the substrate along which relevant integrated circuitry is disposed. The term "horizontal" refers to a direction along the surface of the substrate.

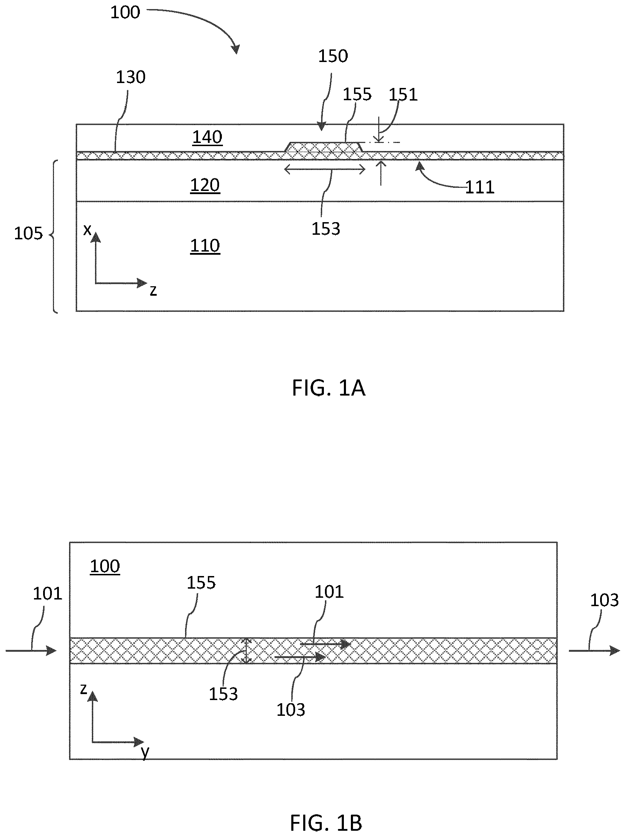

FIGs. 1A and 1B schematically illustrate, in a cross-sectional and plan views, respectively, an example optical chip 100 incorporating an optical waveguide 150 configured for frequency conversion of pump light 101. The optical waveguide 150 is located along a surface 111 of a substrate 105. The substrate 105 may be a single-layer or a multi-layer structure, whose surface 111 is roughly or substantially planar. The substrate 105 may be, for example, a silicon substrate, a silicon-on-insulator (SOI) substrate, or another substrate suitable for supporting a layer of non-linear optical material as described below. In the illustrated example, the substrate 105 includes a planar base 110 having a buffer layer 120 on top. The planar base 110 may be, e.g. a silicon wafer substrate. The buffer layer 120 may be, e.g. a layer of silicon dioxide (SiO2). An optical core 155 of the optical waveguide 150 is formed in a layer 130 of optical material ("optical core layer" 130). The optical material of the layer 130 is selected to be suitable for frequency conversion via, e.g., a second-order nonlinear process ("non-linear optical material"), i.e. having a suitably large second-order susceptibility coefficient χ⁽²⁾. The optical core 155 may be, e.g., a rib or a ridge defined in the nonlinear optical material of the layer 130, with a width *w* 153 ("core width 153") and a thickness *h* 151 ("core thickness 151"). In a typical implementation, the optical core layer 130 is formed from a thin film of the optical material, with the thickness of the film at a corresponding location, typically less than one micron, being approximately the thickness 151 of the optical core 155; accordingly, the core thickness 151 may also be referred to herein as the optical core layer thickness 151 or the film thickness 151.

In the example illustrated in FIG. 1A, the optical core 155 is a ridge, with a thinner layer of the optical material being present away from the core 155; in other implementations, the optical material of the layer 130 may be absent away from the optical core 155, e.g. removed in manufacturing, to form a channel optical waveguide or a rib optical waveguide. A cladding layer 140 may be optionally disposed over the optical core layer 130 to protect the optical core layer 130. Layers 120 and 140 each have a lower refractive index (RI) than the optical core layer 130, and may function as the optical cladding to suitably confine an optical mode within the optical core 155. The RI contrast Δ*n* between the materials of the optical core 155 and the material of the claddings 120 and 130 surrounding the core is typically high, e.g. greater than 0.5. The high cladding-core RI contract provides for a good optical confinement of the pump light in the optical core 155, when almost all, e.g. more than 90% of the pump light power is confined within the optically-non-linear material of the core, as desired for efficient frequency conversion. The thickness 151 and the width 153 of the optical core 155 may be chosen to support the propagation of only one, typically but not exclusively fundamental TE, optical mode of the pump light 101 in the optical waveguide.

Second order nonlinear processes involve mixing of three electromagnetic waves, where the magnitude of the nonlinear response of the optical material is characterized by the χ⁽²⁾ coefficient. Examples of the frequency conversion via a second-order nonlinear process in the optical waveguide 150 include second-harmonic generation (SHG), also referred to as frequency doubling, sum-frequency generation (SFG), difference-frequency generation (DFG), optical parametric amplification (OPA), and spontaneous parametric down conversion (SPDC).

FIG. 1B illustrates an example wherein the optical chip 100 is configured for frequency doubling, or SHG. In the illustrated example, pump light 101 of an optical frequency *f*ₚ is injected into the optical waveguide 150 at one end thereof to provide frequency-converted, in this example - frequency doubled, light 103 having an optical frequency *fₛ* = 2 *f*ₚ at an output end of the optical waveguide 150. In other examples, the pump light 101 may include two distinct optical frequencies, *f*ₚ₁ and *f*ₚ₂, and the frequency-converted light 103 may be light at a sum optical frequency *fₛ* = (*f*ₚ₁ +*f*ₚ₂), or at a difference optical frequency *f*_{d} =|*f*ₚ₁ -*f*ₚ₂|.

A frequency conversion efficiency may be defined as the ratio of the optical power of the pump light at the input to the optical waveguide 150 to the optical power of the frequency converted light at the output of the optical waveguide 150. As the pump light 101 propagates along the optical waveguide 150, e.g. in the *y*-axis direction in FIG. 1B, frequency-converted light 103 generated at various locations therealong is added to the already converted light 103 with a corresponding phase. For an efficient frequency conversion at the output of the optical waveguide 150, the phase difference Δϕ between the pump light 101 and the frequency-converted light 103 should be approximately zero as the optical waves of the pump and converted light, 101 and 103, propagate along the waveguide 150, ideally with the Δϕ = 0 for a perfect phase matching. The refractive index (RI) of the optical material(s), of the waveguide core 155, and thus the effective refractive index of an optical mode of the waveguide 150, is typically dependent on the frequency of light propagating therethrough. Accordingly, unless the optical material of the waveguide is specifically prepared or the optical modes of the pump light and the frequency converted light are specifically selected, the phase difference Δϕ will typically be non-zero and change as the pump light and the frequency converted light propagate along the optical waveguide, accruing a 180° phase difference over a characteristic propagation length *l_{c}* to result in a destructive interference with the already-converted light. Consequently, in such materials the frequency conversion efficiency would not substantially increase with increasing the propagation length beyond *l_{c}*, and would typically remain low in such conditions. The length *l_{c}* may be referred to herein as the frequency conversion coherence (FCC) length.

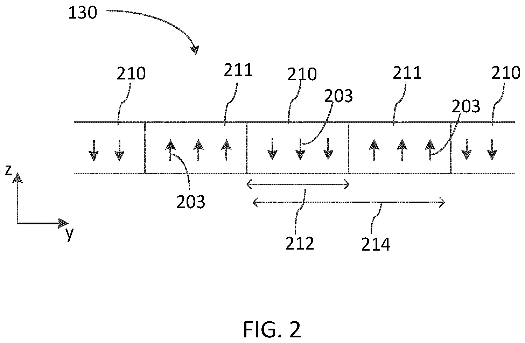

Referring to FIG. 2, in the examples described herein, a quasi-phase matching (QPM) of the pump light 101 and the frequency-converted light 103 (FIG. 1B) in the optical waveguide 150 is achieved using a periodically-poled ferroelectric optical material, e.g. LN, for the optical core 155 of the waveguide 150. Periodic poling is a known in the art technique wherein the spontaneous polarization of a ferroelectric optical material is periodically inverted ("poled") along the direction of light propagation to provide the QPM for pump and frequency-converted light. In the illustrated example, the periodic inversion of the spontaneous polarization of the optical core layer 130 creates an alternating sequence of ferroelectric domains 210 and 211 with oppositely-directed polarization of the optical material of the layer 130 along the length of the waveguide 150, as schematically illustrated by arrows 203. The inversion of the material polarization at the domain interfaces results in a 180° shift of the phase difference Δϕ, compared to the value thereof in the absence of the inversion. Accordingly, the length 212 of each domain 210 or 211 may be approximately equal to the FCC length *l_{c}*, so that the direction of material polarization 203 is flipped 180° each time the phase difference Δϕ between the co-propagating pump light 101 and the frequency-converted light 103 accrues another approximately 180°. An optimal value of the poling period 214, which is approximately 2*l_{c}*, depends on the material of the optical core layer 130, the frequencies of the pump light 101 and the generated light 103, as well as the geometry (width 153, film thickness 151, and etching depth) of the optical waveguide 150. By way of example, for frequency doubling of near-infrared light in x-cut thin-film LN (TFLN) waveguides, the poling period 214 may be in a range from about 2 microns to about 5 microns.

Fabrication inhomogeneities of the optical waveguide 150 may result in a poor QPM along the device length (the y-axis direction in FIGs. 1B and 2), limiting the frequency conversion efficiency that may be achieved by lengthening the optical waveguide 150. Potentially relevant inhomogeneities include variations in the poling period 214 along the waveguide, and variations in various characteristics and parameters of the optical waveguide 150 that may cause the wavenumbers of the pump and/or converted light, and hence the FCC length *l_{c}*, to vary along the waveguide, such as e.g. variations in the width 153 and the thickness 151 of the optical core. Our findings indicate that, at least for some devices wherein the optical core layer 130 comprises a TFLN or other suitable thin-film material fabricated from a bulk crystal, the frequency conversion efficiency may be limited primarily by variations in the thickness 151 of the optical core 155.

As an example, TFLN devices are typically manufactured from bulk LN crystals using ion slicing and thermal annealing. A typical process may include ion implantation to a desired depth, so as to create a cleavage plane in the bulk LN at the desired film thickness, followed by bonding the LN crystal, with the implanted face down, to a selected, e.g. SOI, substrate. The bonding may be followed by thermal annealing to split off the LN crystal along the cleavage plane to form a TFLN layer, e.g. 130, bonded to the substrate, e.g. 105. The splitting may be in turn followed by chemical/mechanical polishing to smooth the TFLN surface. This step may be followed by periodic poling of the TFLN layer through electrical poling or other approaches such as through usage of high-energy laser pulses. The optical core 155 may then be fabricated in the TFLN layer, e.g. 130, using photo or electron-beam lithography followed by selective, e.g. dry or dry/wet, etching. This fabrication method can also be employed to produce other high-quality ferroelectric thin films, such as but not exclusively lithium tantalate.

The fabrication process of the layer 130 of optically non-linear material, such as that described above, may lead to noticeable variations of the thickness 151 of the optical waveguide core 155, and therefore variations in wavenumbers (i.e. the number of wave cycles per unit distance) of the pump and frequency-converted light, 101 and 103, in the optical waveguide 150. These variations of the optical core thickness may be an important factor, or a primary factor in at least some cases, which limits the frequency conversion efficiency of the photonic chip 100 that may be attained by lengthening the waveguide 150.

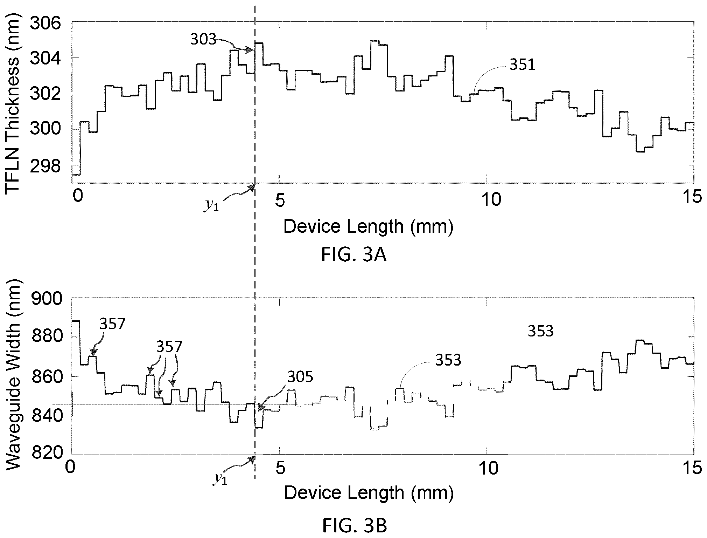

FIG. 3A illustrates an example thickness profile 351 of a typical TFLN film having a nominal thickness of 300 nanometers (nm). The thickness profile shown in FIG. 3A was measured over a length of 15 millimeter (mm) with a sampling step of 200 µm. As can be seen from FIG. 3A, the measured thickness varies from about 297 nm to about 305 nm, i.e. with a peak-to-peak swing of about 8 nm. When such a TFLN film is used to fabricate the optical waveguide 150, the non-uniformity in the film thickness translates into non-uniformities of the thickness 151 of the optical core 155, causing the wavenumbers of the pump light 101, *k*ₚ, and the frequency-converted light 103, kₛ, in the waveguide 150 to fluctuate, or vary, along the length of the waveguide. The variations of the wavenumbers *k*ₚ, *k*ₛ along the optical waveguide 150 due to the film thickness non-uniformity introduce phase errors in the interacting light waves 101 and 103, thereby constraining the frequency-conversion efficiency of the device. Moreover, the core thickness nonuniformity typically becomes more pronounced with larger waveguide areas; as the phase errors accumulate over the waveguide length, extending the waveguide length may not increase the frequency conversion efficiency of the device. Consequently, despite the great potential of the thin-film devices, the frequency conversion efficiency of, e.g., TF-PPLN devices may remain below those of state-of the-art bulk counterparts, thus limiting their practical applications in optical systems.

The present disclosure addresses the issue of non-uniform optical core layer thickness, and hence the non-uniform optical core thickness 151 of the frequency-converting optical waveguide 150, by correspondingly varying the width w 153 of the optical core 155 of the waveguide along the length thereof, in coordination with variations of the optical core layer thickness / waveguide core thickness 151. That is, the optical core width w 153 may be modulated along the optical waveguide 150, taking different values along the *y*-coordinate in the examples of FIGs. 1B and 2, *w* = *w*(*y*), in a manner that lessens the effect of the non-uniformity of the layer thickness 151 on the QPM of the pump (101) and the frequency-converted (103) light waves. This may be achieved, e.g., by varying the core width *w* 153 along the optical waveguide 150, *w* = *w*(*y*), such as to at least partially offset the influence of the varying layer thickness *h* 151, *h* = *h*(*y*) upon the phase mismatch, defined as (*2k*ₛ - *k*ₚ), between the pump and frequency-converted light, 101 and 103, respectively, and to keep the phase mismatch approximately constant along the optical waveguide 150 despite the variations in the layer thickness 151. In some implementations, the width *w* 153 of the optical core may be made to vary along the optical waveguide such as to lessen variations of a velocity of light, e.g. the pump light 101 and/or the frequency converted light 103, propagating in the optical waveguide 150 due to the variations of the thickness *h* 151 of the optical core 155.

FIG. 3B illustrates, by way of example, spatial modulation of the optical core width 153 over a waveguide length of 15 mm computed for a TFLN waveguide having the core thickness profile 351 shown in FIG. 3A. Computer simulations suggest that modulating the width, e.g. 153, of the optical core, e.g. 155, along the length of the optical waveguide, e.g. 150, according to a core width profile 353 shown in FIG. 3B may correct for phase errors introduced by the optical core layer thickness variations shown in FIG. 3A, and may increase the frequency conversion efficiency of the 15 mm long waveguide eight-fold, compared to a same waveguide having the core thickness profile 351 of FIG. 1A and a uniform width of 850 nm along the whole length, i.e., 15 mm, of the waveguide. In the simulations, the etch depth to define the optical core 155 was assumed to be about 150 nm by way of example.

In the example shown in FIGs. 3A and 3B, the optical core width *w* 153 varies therealong in a manner correlated with the variations of the measured core thickness profile 351. That is, the optical core width *w* 153 changes along the waveguide 150 in an approximately complementary fashion to the variations of the core thickness 151, e.g. as illustrated by opposite-sign changes in the core thickness profile 351 and the core width profile 353 at corresponding locations along the optical waveguide. E.g., for an example location *y*₁ along the waveguide in the shown example, an increase Δ*h* 303 in the measured optical core thickness 351 (FIG. 3A) is accompanied by a decrease Δ*w* 305 in the core width profile 353 (FIG. 3B).

Suitably modulating the core width 153 along the waveguide in a counter-phase with the core thickness variations, e.g. as shown in FIGs. 3A and 3B, may help to keep an optical mode confinement factor in the waveguide core, and hence the wavenumber of the optical mode, approximately constant along the waveguide. An optimal value of the relative change Δ*w*/*w* in the core width may be greater than the corresponding relative change Δ*h*/*h* in the core thickness, as the wavenumber may be more sensitive to the core thickness than the core width for thin-film waveguides.

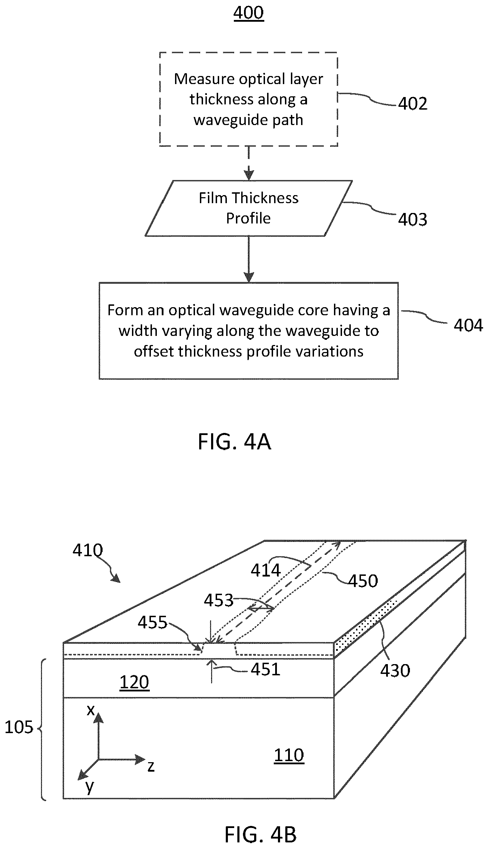

Referring to FIGs. 4A and 4B, an aspect of the present disclosure provides a method 400 (FIG. 4A) for fabricating an optical waveguide 450 in a layer 430 of a thin-film optical material (FIG. 4B) having a film thickness 451 that varies along a path of the optical waveguide 450. The FIG. 4B illustrates a portion of a wafer from which an optical chip 410 with the optical waveguide 450 is to be fabricated. The optical chip 410 and the waveguide 450 may be examples of the optical chip 100 and the optical waveguide 150 described above. The layer 430, which may also be referred to as the optical core layer 430 or the film 430, is an embodiment of the optical core layer 130 prior to etching thereof to define the optical core 155 of the waveguide 150 (FIG. 1A).

The method 400 may be useful to eliminate, or at least lessen, the deterioration of the frequency conversion efficiency in an optical waveguide caused by a loss of QPM along portions of the waveguide due to variations in the thickness of the film along the waveguide path. In the illustrated embodiment, the method 400 includes a thickness measuring step 402 and a waveguide core fabrication step 404. The thickness measuring step 402 includes measuring the thickness 451 of the layer 430 along the path 414 of the optical waveguide 450 to be fabricated in the chip 410. The layer thickness 451 may be measured, e.g., at a wafer processing stage prior to etching the layer 430 to form an optical core 455, and prior to separating the chip 410 from the wafer, e.g. by dicing. Accurate measurements of the thickness variations, with sub-nanometer resolution, may be performed by, e.g., measuring a spectral reflectance of the wafer using a commercial thin-film metrology instrument. Step 402 outputs thickness measurement data 403 comprising information about spatial thickness variations of the optical core layer 430 along a path 414 of the optical waveguide 450, e.g. in the form of a layer thickness profile such as the thickness profile 351 of FIG. 3A. In some embodiments, the film thickness measuring step 402 may be followed by a periodic poling step, e.g. using a technique of periodic poling of ferroelectric materials known in the art. In some embodiments, the step of periodic poling may be performed prior to the thickness measuring step 404.

In some embodiments, the film thickness measuring step 402, and possibly the periodic poling, may be performed at a different stage of the fabrication process, e.g. at a wafer supplier's fabrication facility, and the method 400 may start with step 404, having the film thickness data 403 as an externally-provided input.

At the waveguide core fabrication step 404, the optical core 455 is formed in such a way that the core width 453 varies along the waveguide path 414 in a manner that compensates for the measured variations of the film thickness, as estimated from the film thickness data 403, e.g. as described above with reference to FIGs. 3A and 3B. This step may include determining the width modulation profile, e.g. 353, along the optical waveguide 450 based on the film thickness profile, e.g. 351, along the waveguide path 414 measured at step 402.

The core width modulation profile is chosen in step 414 so as to facilitate maintaining an approximate QPM between the pump light, e.g. 101, and the frequency-converted light, e.g. 103, preferably along a whole length of the optical waveguide. In some embodiments, the core width modulation profile may be chosen such as to lessen variations of a velocity of light, e.g. 101 or 103, propagating in the optical waveguide due to the variations of the thickness *h* 151 of the optical core 155. In some embodiments, the core width profile determination may include computer simulations of optical mode propagation in the waveguide for the pump and frequency-converted light. In some embodiments, the simulations may include QPM simulations along an optical waveguide having the measured core thickness variations and a target core width profile. In some embodiments, the width profile determination may include scaling the measured core thickness variations using one or more suitable scaling factors. The one or more scaling factors may be, e.g. estimated based on a relative sensitivity of the phase mismatch between the pump light and the frequency-converted light to the core thickness and core width variations. In various embodiments, the width 453 of the optical core 455 of the optical waveguide 450 may vary by 20 nm or more over a length of the waveguide, and by 30 nm or more typically.

The core fabrication step 404 typically further includes using e-beam lithography or photolithography to define the optical core 455 having the computed width modulation profile along the waveguide path 414. By way of example, if the film thickness data 403 comprises information yielding the optical core layer thickness profile 351 illustrated in FIG. 3A, step 404 may include using e-beam or photo lithography to define the optical core 455 having the width modulation profile 353 shown in FIG. 3B. The lithography step may be followed by etching the optical core layer 430 to define the optical core 455 having the desired width profile. The fabrication of the optical core 455 may be optionally followed by depositing a top cladding layer over the core 455, e.g. as described above with reference to FIG. 1A and the layer 140. In some embodiments, of the material of the optical core 155 may be conducted after forming the optical core 455 by etching in step 404.

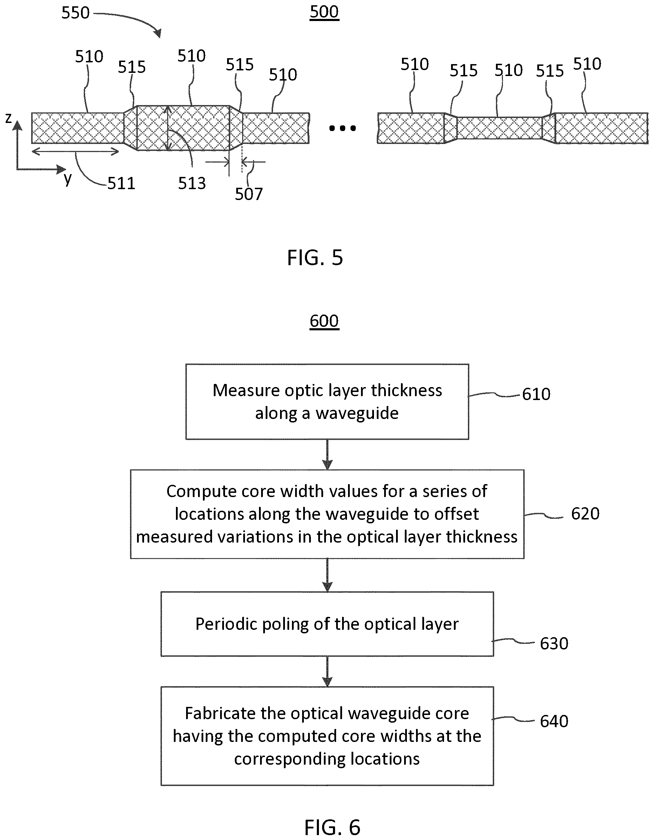

FIG. 5 shows, in a plan view, an example optical waveguide 500 having an optical core 550 with a spatially modulated width 513. The optical waveguide 500 may be used in embodiments of the present disclosure, and may be an example of the optical waveguide 130 illustrated in FIGs. 1A and 1B or the optical waveguide. The optical core 550 may be an embodiment of the optical core 155 or the optical core 455 described above. The optical core 550 includes a sequence of core segments 510 of different widths 513 that are connected by core tapers 515. The width 513 of each of the core segments 510 may be approximately constant along the length *lₛ* 511 thereof. In various embodiments, the length *lₛ* 511 of one of the core segments 510 may be, e.g., in a range from about 50 µm to about 1000 µm, or in a 100 to 500 µm range for some typical embodiments. The length *lₜ* 507 of one core taper 515 is preferably larger than 5 µm to reduce reflections at the junctions between core segments 510 of different widths. The taper length *lₜ* 507 may be, e.g., in a 10 to 50 µm range for some typical embodiments. A typical implementation of the waveguide 500 may include more than 10 pairs, or preferably more than 20 pairs, of adjacent core segments 510, with different-width segments in each of the pairs. In at least some implementations, the core segments 510 of each of such pairs may differ in width by 20 nm or more.

For the example illustrated in FIGs. 3A and 3B, the core segments 510 have each a length of 180 µm, and are connected by 20 µm long tapers 515. The width 513 of different ones of the core segments 510 varies from about 830 nm and about 890 nm, or about 60 nm peak-to-peak, as shown in FIG. 3B. The widths 513 of the core segments 510 are given by corresponding 180 µm long segments of the width profile 353, four of which are indicated in FIG. 3B at 357 by way of example. In various embodiments, the width of the core segments 510 of a same optical waveguide 500 may vary by more than 20 nm, peak-to-peak, over a length of the waveguide, and by about or more than 30 nm peak to peak more typically, or e.g. by about or more than 50 nm peak-to-peak in some example implementations.

Referring back to FIGs. 4A and 4B, in some embodiments the film thickness data 403 may include, or may be processed to obtain, a sequence of layer thickness values *hᵢ*, *i =* 1, 2, ..., *N*, corresponding to a series of locations *yᵢ* spaced by, approximately, the segment length *lₛ* 511 plus the core taper length *lₜ* 507, along the waveguide path 414. Here, *N* is the number of core segments, e.g., segments 510, in the optical waveguide, e.g. 500. In come implementations, step 402 may include measuring the thickness of the optical core layer 430 along the waveguide length 414 with a spatial step *lₘ* equal to, approximately, (*lₛ + lₜ*).. In some implementations, the thickness of the optical core layer 430 may be measured more densely, with a measurement step *lₘ* along the waveguide path 414 that is smaller than the segment length *lₛ* 511. In such cases, the film thickness measurement data 403 may be processed by averaging the measured thickness values over a sequence of averaging windows of length *lₛ* corresponding to different ones of the core segments 510. The method 400 may then include determining the widths of the waveguide segments 510 based on the optical core layer thickness values for the corresponding waveguide locations obtained in step 402.

FIG. 6 is a flowchart of a method 600 for fabricating a frequency-converting optical waveguide, such as e.g. the waveguide 150, the waveguide 450, or the waveguide 500, which optical core is spatially-modulated along some length of the waveguide. The method 600, which is an embodiment of the method 400, includes step 610, in which the thickness of an optical core layer, e.g. 430, may be measured along a path of the optical waveguide to be fabricated, e.g. 414, to provide a sequence of thickness values of the optical core layer for a series of locations along the waveguide path 414. Alternatively, step 610 may generate the sequence of thickness values from film thickness data, e.g. 403, provided as input to the method 600. At step 620, the widths 513 of the core segments 510 are computed based on the sequence of core thickness values obtained at step 610 for corresponding locations along the waveguide path. As described above, the core width values obtained at this step of the method vary in a manner that facilitates maintaining an approximate QPM between the pump light and the frequency-converted light along the optical waveguide. E.g., the core width values obtained at this step are such that their variation along the waveguide compensates for the measured layer thickness variation to keep the phase mismatch between the pump and the frequency-converted light waves approximately constant along the optical waveguide. In some embodiments, step 620 may include computer simulations of optical mode propagation in the waveguide for the pump and frequency-converted light. In some embodiments, step 620 may include QPM simulations along an optical waveguide having the measured core thickness variations and a target core width profile. In some embodiments, step 620 may include scaling the measured core thickness variations using one or more suitable scaling factors. The one or more scaling factors may be, e.g. estimated based on a relative sensitivity of the phase mismatch between the pump light and the frequency-converted light to the core thickness and core width variations.

At step 630, the TFLN layer 430 is periodically poled as a way to achieve QPM. The periodic poling step 630 typically includes using e-beam lithography or photolithography to define a series of poling electrodes on the surface of the, e.g., TFLN layer 430 with a fixed poling period of approximately 2*l_{c}*. This lithography step may be followed by periodic poling of the TFLN 455 by application of one or more optimized high-voltage pulses to the poling electrodes. The periodic poling of the TFLN 430 may be optionally followed by removing the fabricated poling electrodes, e.g., by wet etching. In some embodiments, periodic poling of the TFLN may be conducted through a different approach, such as, e.g., poling with atomic force microscopy tips or high-energy laser pulses, such that either the surface poling electrodes or the application of high-voltage pulses may not be needed. In some embodiments, step 630 may precede step 610.

At step 640, the optical waveguide core 550 is fabricated having the core widths obtained in step 620 for the corresponding locations, e.g. by etching the optical core layer using one of a known in the art etching techniques. A top cladding layer, e.g. 140, may be optionally deposited following the etching of the optical core layer to define the optical core of the waveguide. In some embodiments, step 640 may be conducted before step 630.

The examples of optical waveguide devices of optical frequency conversion described above are not intended to be limiting, and many variations will become apparent to a skilled reader having the benefit of the present disclosure. For example, the length of optical core segments 510 and/or the waveguide tapers 515 may vary along the optical waveguide. The optical core layer 130 or 430 may comprise non-linear optical materials other than TFLN, such as but not exclusively lithium tantalate and potassium titanyl phosphate. Furthermore, in some embodiments the core widths of the waveguide tapers may vary in a non-linear fashion, e.g., along the length of the core tapers 515. In some embodiments, thickness variation of the TFLN layer 430 may be minimal along the majority length of the optical waveguide, where the number of optical core segments 510 may be less than 10. In some embodiments, the phase mismatch between the pump light and the frequency-converted light may not be as sensitive to the film thickness variation as the exemplary optical core structure, such that the width of the core segments 510 of a same optical waveguide 500 may vary by less than 20 nm.

According to an example embodiment disclosed above, e.g., in the summary section and/or in reference to any one or any combination of some or all of FIGs. 1-6, provided is an apparatus comprising a photonic chip (e.g. 100, 410) configured for optical frequency conversion. The photonic chip comprises a substrate (e.g. 105, FIG. 1A, FIG. 4B) having a surface (e.g. 111, FIG. 1); and a planar optical waveguide (e.g. 150; 450; 500) disposed along the surface and comprising an optical core (e.g. 155; 455; 550) of periodically-poled thin-film ferroelectric material, the optical core having a thickness (e.g. 151; 451) and a width (e.g. 153; 453), the thickness varying along the optical waveguide. The width of the optical core varies therealong in a manner (e.g. 353) correlated with variations (e.g. 351) of the thickness of the optical core along the optical waveguide.

In some implementations, the width of the optical core varies therealong in a complementary fashion to the thickness of the optical core (e.g. 353, 351).

In any of the above implementations, the ferroelectric material may be lithium niobate.

In any of the above implementations, the width may vary such as to maintain a quasi-phase matching along the optical waveguide for pump light propagating in the optical core and light generated by non-linear conversion of the pump light in the optical core.

In any of the above implementations, the width of the optical core may vary by at least 20 nanometers over the length of the optical waveguide.

In any of the above implementations, the optical waveguide core may comprise a sequence of core segments of different widths. At least some of the segments may have an approximately constant width along the length thereof. Adjacent ones of the core segments may be connected by wedge-shaped segments in some implementations. In any of the above implementations including core segments, at least two of the core segments may differ in width by at least 20 nm. In some of such implementations, the optical core comprises at least 10 adjacent pairs of the core segments, the core segments of each of the pairs being of different widths. In some of such implementations, the core segments of each of the pairs may differ in width by at least10 nm.

According to an example embodiment disclosed above, e.g., in the summary section and/or in reference to any one or any combination of some or all of FIGs. 1-6, further provided is a method comprising: selectively etching a layer (e.g. 130; 430) of a thin-film periodically-poled ferroelectric material disposed along a planar surface (e.g. 111) of a substrate (e.g. 105) to form an optical core (e.g. 155; 455; 550) of a waveguide, the optical core having a width (e.g. 153, 453, 513) that varies along a length of the waveguide in a manner dependent on variations of a thickness (e.g. 151; 451) of the layer along the optical core of the waveguide.

Some implementations of the method may comprise measuring the thickness of the thin-film layer at multiple locations along the waveguide. Any of the above implementations of the method may comprise varying the width of the optical core along thereof in a manner complementary to the variations of the thickness of the thin-film layer. Any of the above implementations of the method may comprise computing the width of the waveguide for a plurality of locations therealong based on the thickness of the thin-film layer obtained for said locations.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims. Various features described above with reference to a specific embodiment or embodiments may be combined with other embodiments.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Furthermore in the description above, for purposes of explanation and not limitation, specific details are set forth such as particular architectures, interfaces, techniques, etc. in order to provide a thorough understanding of the present invention. In some instances, detailed descriptions of well-known devices, circuits, and methods are omitted so as not to obscure the description of the present invention with unnecessary detail. Thus, for example, it will be appreciated by those skilled in the art that block diagrams herein can represent conceptual views of illustrative circuitry embodying the principles of the technology. All statements herein reciting principles, aspects, and embodiments of the invention, as well as specific examples thereof, are intended to encompass both structural and functional equivalents thereof.

Thus, while the present invention has been particularly shown and described with reference to example embodiments as illustrated in the drawing, it will be understood by one skilled in the art that various changes in detail may be affected therein without departing from the spirit and scope of the invention as defined by the claims.

Embodiments 13 to 20 defined below are a transcript of claims 13 to 20 of US patent application number 18/414,131 filed on 16 January 2024, the contents of which are incorporated herein by reference.
Embodiment 13. A method comprising: selectively etching a layer of ferroelectric material disposed along a planar surface of a substrate to form an optical core of a waveguide, the optical core having a width that varies along the waveguide in a manner correlated with variations of a thickness of the layer along the optical core of the waveguide.
Embodiment 14. The method of embodiment 13 comprising measuring the thickness of the layer at multiple locations along the waveguide.
Embodiment 15. The method of embodiment 13 comprising varying the width of the optical core along the optical waveguide in a manner complementary to the variations of the thickness of the layer.
Embodiment 16. The method of embodiment 13 comprising computing the width of the waveguide for a plurality of locations along the optical waveguide based on the thickness of the layer obtained for said locations.
Embodiment 17. The method of embodiment 14 further comprising periodically poling the ferroelectric material of the layer.
Embodiment 18. The method of embodiment 17 wherein the measuring is performed prior to the periodically poling.
Embodiment 19. The method of embodiment 17 wherein the measuring is performed after the periodically poling.
Embodiment 20. The method of embodiment 13 wherein the ferroelectric material comprises one of lithium niobate and lithium tantalate.

## Claims

1. An apparatus comprising:
a photonic chip for optical frequency conversion, comprising:
a substrate having a surface; and
a planar optical waveguide disposed along the surface and comprising an optical core of periodically-poled thin-film ferroelectric material, the optical core having a thickness and
a width, the thickness varying along the optical waveguide;
wherein the width of the optical core varies along the optical waveguide in a manner correlated with variations of the thickness of the optical core along the optical waveguide.

2. The photonic chip of claim 1 wherein the width of the optical core varies along the optical waveguide in a complementary fashion to the thickness of the optical core.

3. The photonic chip of claim 1 wherein the ferroelectric material is lithium niobate.

4. The photonic chip of claim 1 wherein the ferroelectric material is lithium tantalate.

5. The photonic chip of claim 1 wherein the width varies such as to maintain a quasi-phase matching along the optical waveguide for pump light propagating in the optical core and light generated by non-linear conversion of the pump light in the optical core.

6. The photonic chip of claim 1 wherein the width varies by at least 20 nanometers over the length of the optical waveguide.

7. The photonic chip of claim 1 wherein the optical waveguide core comprises a sequence of core segments of different widths.

8. The photonic chip of claim 7 wherein at least some of the core segments have an approximately constant width along the length thereof.

9. The photonic chip of claim 7 wherein adjacent ones of the core segments are connected by wedge-shaped segments.

10. The photonic chip of claim 7 wherein at least two of the core segments differ in width by at least 20 nm.

11. The photonic chip of claim 7 comprising at least 10 adjacent pairs of the core segments, the core segments in each of the pairs being of different widths.

12. The photonic chip of claim 11 wherein at least two of the core segments differ in width by at least 20 nm.

13. A method comprising:
selectively etching a layer of ferroelectric material disposed along a planar surface of a substrate to form an optical core of a waveguide, the optical core having a width that varies along the waveguide in a manner correlated with variations of a thickness of the layer along the optical core of the waveguide.

14. The method of claim 13 comprising measuring the thickness of the layer at multiple locations along the waveguide.

15. The method of claim 13 comprising varying the width of the optical core along the optical waveguide in a manner complementary to the variations of the thickness of the layer.
